(19) Europäisches Patentamt
European Patent Office
Office européen des brevets

(11) **EP 3 857 704 B1**

(12) **EUROPÄISCHE PATENTSCHRIFT**

(45) Veröffentlichungstag und Bekanntmachung des Hinweises auf die Patenterteilung:
**31.05.2023  Patentblatt 2023/22**

(21) Anmeldenummer: **19773791.9**

(22) Anmeldetag: **20.09.2019**

(51) Internationale Patentklassifikation (IPC):
**H02P 21/00** (2016.01)   **B60L 15/02** (2006.01)

(52) Gemeinsame Patentklassifikation (CPC):
**H02P 21/00; H02P 21/14; H02P 21/18**

(86) Internationale Anmeldenummer:
**PCT/EP2019/075303**

(87) Internationale Veröffentlichungsnummer:
**WO 2020/064536 (02.04.2020 Gazette 2020/14)**

(54) **VERFAHREN ZUR ERMITTLUNG EINES EINE WINKELDIFFERENZ ZWISCHEN EINER ANGENOMMENEN UND EINER TATSÄCHLICHEN LAGE EINER D-ACHSE BESCHREIBENDEN KORREKTURWERTS, STEUERUNGSEINRICHTUNG, WECHSELRICHTER, FAHRZEUG UND COMPUTERPROGRAMM**

METHOD FOR DETERMINING A CORRECTION VALUE WHICH DESCRIBES AN ANGULAR DIFFERENCE BETWEEN AN ASSUMED AND AN ACTUAL POSITION OF A D-AXIS, CONTROL DEVICE, INVERTER, VEHICLE AND COMPUTER PROGRAM

PROCÉDÉ POUR DÉTERMINER UNE VALEUR DE CORRECTION DÉCRIVANT UNE DIFFÉRENCE ANGULAIRE ENTRE UNE POSITION SUPPOSÉE ET UNE POSITION RÉELLE UN AXE D, UNITÉ DE COMMANDE, ONDULEUR, VÉHICULE ET PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2018   DE 102018124105**

(43) Veröffentlichungstag der Anmeldung:
**04.08.2021   Patentblatt 2021/31**

(73) Patentinhaber: **Valeo eAutomotive Germany GmbH
91056 Erlangen (DE)**

(72) Erfinder:
• **SEILMEIER, Markus
90765 Fürth (DE)**
• **HELD, Andreas
90762 Fürth (DE)**
• **WALTER, Andreas
90411 Nürnberg (DE)**
• **KÖPKEN, Hans-Georg
91056 Erlangen (DE)**

(74) Vertreter: **Dr. Gassner & Partner mbB
Wetterkreuz 3
91058 Erlangen (DE)**

(56) Entgegenhaltungen:
**EP-A1- 3 208 935      DE-A1-102016 219 794
US-A1- 2004 061 461**

• **SEILMEIER MARKUS ET AL: "Impact of iron losses and parameter errors on back-EMF based sensorless control of PMSM", IECON 2014 - 40TH ANNUAL CONFERENCE OF THE IEEE INDUSTRIAL ELECTRONICS SOCIETY, IEEE, 29. Oktober 2014 (2014-10-29), Seiten 634-640, XP032739245, DOI: 10.1109/IECON.2014.7048567 [gefunden am 2015-02-24] in der Anmeldung erwähnt**

**Beschreibung**

Die vorliegende Erfindung betrifft ein Verfahren zur Ermittlung eines Korrekturwerts für eine Steuerungseinrichtung für eine elektrische Maschine, wobei der Korrekturwert eine Winkeldifferenz zwischen einer in einer initialen Konfiguration der Steuerungseinrichtung auf Basis von Rotorlageinformationen eines Rotorlagegebers angenommenen Lage einer d-Achse der elektrischen Maschine und einer tatsächlichen Lage der d-Achse beschreibt. Daneben betrifft die Erfindung eine Steuerungseinrichtung, einen Wechselrichter, ein Fahrzeug und ein Computerprogrammprodukt.

Die US 2004/061461 A1 offenbart einen Phasenkorrigierer eines Motorsteuergeräts zum Ermitteln und Ausgeben eines Fehlerwinkel einer Magnetposition, der einen Fehlerwinkel eines von einem Magnetpolpositionsdetektor erhaltenen Drehwinkels von einem tatsächlichen Drehwinkel von Magnetpolen repräsentiert. Der Phasenkorrigierer gibt ein Schaltkommando aus, sodass ein d-Strom von null und ein q-Strom von null vorgegeben werden. Bei einer vorgegebenen Drehzahl ermittelt der Phasenkorrigierer den Fehlerwinkel gemäß der Gleichung $\theta ofs = \tan^{-1}(Vdc/Vqc)$, wobei Vdc ein d-Achsen-Spannungskommando und Vqc ein q-Achsen-Spannungskommando ist.

Die WO2018133581 offenbart ein Verfahren zur Ermittlung der Anfangslage eines Rotors aus den Achsenspannungen.

Eine feldorientierte Regelung elektrischer Maschinen erfordert eine Bestimmung einer Lage einer d-Achse. Typischerweise wird die Rotorlageinformation von einem Rotorlagegeber bereitgestellt und beschreibt eine Relativposition eines Rotors der elektrischen Maschine zu ihrem Stator. Dabei entspricht eine Nullachse des Rotorlagegebers, beispielsweise aufgrund von Montageungenauigkeiten, nicht der d-Achse der elektrischen Maschine. Eine solche Abweichung der Nullachse von der d-Achse wird als Offset bezeichnet, bei dessen Kenntnis aus der Rotorlageinformation die Lage der d-Achse bestimmbar ist. Auf Basis einer vom Rotor erzeugten gegenelektromotorischen Kraft lässt sich in einer initialen Konfiguration mit ungewisser Winkeldifferenz einer angenommenen Lage der d-Achse zur tatsächlichen Lage der d-Achse ein Korrekturwert ermitteln, der gleichsam eine Winkeldifferenz zwischen dem Offset in der initialen Konfiguration und dem tatsächlichen Offset beschreibt.

Insbesondere bei automotiven Anwendungen ist eine präzise Steuerung einer Drehmomenterzeugung durch die elektrische Maschine wichtig. Während Fehler des Offsets nur einen verhältnismäßig geringen Einfluss auf das erzeugte Drehmoment in einem Betrieb mit maximalem Drehmoment-zu-Strom-Verhältnis (Maximum Torque per Ampere - MTPA) aufweisen, wird die Kenntnis des Offsets mit steigender Geschwindigkeit der elektrischen Maschine bzw. des Fahrzeugs wichtiger, da in einem Betriebsbereich in der Nähe einer Spannungsobergrenze ein Fehler des Offsets einen hohen Einfluss auf den Fehler des erzeugten Drehmoments hat. Eine ungenaue Kenntnis des Offsets kann dann zu verringerter Effizienz der elektrischen Maschine oder zu Abweichungen zwischen angeforderten und tatsächlichen Drehmoment führen.

Das Dokument EP 3 208 935 A1 offenbart ein Prüfverfahren für einen elektrischen Antrieb, bei dem zur Ermittlung eines Offsets ein Rotor der elektrischen Maschine in unterschiedlichen Drehrichtungen gedreht und basierend auf Reaktionen des Antriebs ein Qualitätsmaß für eine ermittelte Lage einer d-Achse bestimmt wird.

Ein derartiges Ermitteln des Offsets durch mehrfaches Drehen des Rotors in zwei unterschiedlichen Drehrichtungen verbessert zwar die Genauigkeit der ermittelten d-Achse, ist aber nur aufwändig durchführbar.

Der Erfindung liegt mithin die Aufgabe zugrunde, eine demgegenüber verbesserten Möglichkeit zum Ermitteln des Korrekturwerts anzugeben, die insbesondere aufwandsärmer durchführbar ist.

Die Erfindung ist in den unabhängigen Ansprüchen festgelegt.

Zur Lösung dieser Aufgabe wird erfindungsgemäß ein Verfahren zur Ermittlung eines Korrekturwerts für eine Steuerungseinrichtung für eine elektrische Maschine vorgeschlagen, wobei der Korrekturwert eine Winkeldifferenz zwischen einer in einer initialen Konfiguration der Steuerungseinrichtung auf Basis von Rotorlageinformationen eines Rotorlagegebers angenommenen Lage einer d-Achse der elektrischen Maschine und einer tatsächlichen Lage der d-Achse beschreibt, wobei ein Nullstrom in Statorwicklungen der elektrischen Maschine eingeprägt und der Korrekturwert in einem rotierenden Zustand eines Rotors der elektrischen Maschine in Abhängigkeit eines d-Spannungswerts, der eine d-Komponente einer von der Steuerungseinrichtung in der initialen Konfiguration vorgegebenen Statorspannung beschreibt, eines q-Spannungswerts, der einer q-Komponente der von der Steuerungseinrichtung in der initialen Konfiguration vorgegeben Statorspannung beschreibt, eines Flusswerts, der einen magnetischen Fluss des Rotors beschreibt, eines Drehzahlwerts, der die Drehzahl des Rotors im rotierenden Zustand beschreibt, und eines Kalibrierwerts, der einen drehzahlabhängigen Spannungsfehler der d-Komponente der Statorspannung beschreibt, ermittelt wird.

Die Erfindung beruht auf der Erkenntnis, dass durch das Betreiben der elektrischen Maschine in unterschiedlichen Drehrichtungen der Einfluss von Eisenverlusten und Timingfehlern beim Betrieb der elektrischen Maschine ausgeglichen wird, was sich jedoch dadurch vereinfachen lässt, dass dieser Einfluss auf den verwendeten d-Spannungswert durch den drehzahlabhängigen Kalibrierwert berücksichtigt wird. Ein solcher Kalibrierwert kann im Vorfeld der Ermittlung des Korrekturwerts allgemein für einen bestimmten Maschinentyp und/oder einen bestimmten Wechselrichtertyp ermittelt worden sein. Dies ermöglicht eine präzise und gleichzeitig aufwandsarme Ermittlung des Korrekturwerts, da dieser in einem Betrieb der elektrischen Maschine, bei dem nur einer einzige Drehrichtung vorgesehen ist, ermittelt werden kann.

Durch das erfindungsgemäße Verfahren wird die auf der gegenelektromotorischen Kraft beruhende herkömmliche Ermittlung des Korrekturwerts auf Basis der für einen stationären, stromfreien Betrieb geltenden Spannungsgleichungen

$$u_d = 0 \qquad\qquad (1)$$

$$u_q = \omega_{el} \cdot \Psi \qquad\qquad (2)$$

um eine Berücksichtigung des typischerweise empirisch ermittelten Spannungsfehlers ergänzt:

$$u_d = \Delta u_d(\omega_{el}) \qquad\qquad (3)$$

$$u_q = \omega_{el} \cdot \Psi \qquad\qquad (4)$$

Dabei beschreiben in den Gleichungen (1) bis (4) $u_d$ die d-Komponente der Statorspannung, $u_q$ die q-Komponente der Statorspannung, $\omega_{el}$ die elektrische Winkelgeschwindigkeit, $\Psi$ den magnetischen Fluss des Rotors und $\Delta u_d(\omega_{el})$ den durch den Kalibrierwert repräsentierten drehzahlabhängigen Spannungsfehler der d-Komponente der Statorspannung. Der Spannungsfehler lässt sich insbesondere auf Eisenverlust und Timingfehler zurückführen, was detailliert im Artikel von M. Seilmeier and B. Piepenbreier, "Impact of iron losses and parameter errors on back-EMF based sensorless control of PMSM," IECON 2014 - 40th Annual Conference of the IEEE Industrial Electronics Society, Dallas, TX, 2014, pp. 634-640, beschrieben wird.

Die initiale Konfiguration bezieht sich typischerweise auf einen Zustand, in welchem der Rotorlagegeber mit einem unbekannten oder ungewissen Versatz angeordnet und die Steuerungseinrichtung eine geschätzte oder ungefähre Lage der d-Achse annimmt. Folglich kann in der initialen Konfiguration ein initialer Offset zwischen einer Nullachse des Rotorlagegebers und der angenommenen Lage der d-Achse vorgegeben sein. Nach Ermittlung des Korrekturwerts kann ein korrigierter Offset, der eine Differenz zwischen dem initialen Offset und dem Korrekturwert ist, verwendet werden.

Bei dem erfindungsgemäßen Verfahren kann der Drehzahlwert die, insbesondere elektrische, Drehzahl als Winkelfrequenz oder Frequenz beschreiben.

Grundsätzlich können der Kalibrierwert statisch und die Drehzahl im rotierenden Betrieb fest vorgegeben sein. Bevorzugterweise ist die Drehzahl jedoch variabel und der Kalibrierwert wird in Abhängigkeit des Drehzahlwerts ermittelt. Dies erlaubt eine Ermittlung des Korrekturwert während des laufenden Betriebs der elektrischen Maschine, insbesondere im Anschluss an eine Erstinbetriebnahme eines die elektrische Maschine zum Antrieb aufweisenden Fahrzeugs, nach einer Reparatur oder Wartung des Fahrzeugs oder zur Kontrolle oder Rekalibrierung während der Nutzungszeit des Fahrzeugs.

Besonders bevorzugt wird der Kalibrierwert dabei aus einem abgespeicherten Kennfeld, das Drehzahlen der elektrischen Maschine jeweils einen Kalibrierwert zuordnet, ausgelesen. Dies ermöglicht eine besonders einfache Berechnung des Kalibrierwerts, da dieser für einen spezifischen Maschinentypen und/oder Wechselrichtertypen einmalig ermittelt und in einer Speichereinheit der Steuerungseinrichtung abgelegt werden kann. Bei der Durchführung des erfindungsgemäßen Verfahrens muss dann lediglich auf das abgespeicherte Kennfeld zurückgegriffen werden, um die präzise und aufwandsarme Ermittlung des Korrekturwerts zu ermöglichen. Alternativ ist der Korrekturwert für eine Drehzahl im rotierenden Zustand des Rotors fest vorgegeben.

Besonders bevorzugt wird zum Ermitteln des Korrekturwerts die folgende Gleichung ausgewertet:

$$\Delta\gamma_i = atan\big(\omega_{el} \cdot \Psi \cdot u_d - \Delta u_d \cdot u_q, \Delta u_d \cdot u_d + \omega_{el} \cdot \Psi \cdot u_q\big), \qquad (5)$$

wobei *atan(x,y)* eine Arcustangensfunktion oder Arcuscotangensfunktion, insbesondere $arctan\left(\dfrac{x}{y}\right)$ oder $arccot\left(\dfrac{y}{x}\right)$ oder *atan2(x,y)* oder *acot2(y,x)*, beschreibt, $u_d$ den d-Spannungswert beschreibt, $u_q$ den q-Spannungswert beschreibt, $\Psi$ den Flusswert beschreibt, $\omega$ den Drehzahlwert, insbesondere als elektrische Winkelfrequenz $\omega_{el}$, beschreibt und $\Delta u_d$ den Kalibrierwert beschreibt.

Diese Gleichung beruht auf der Erkenntnis, dass sich die Zusammenhänge zwischen den Statorspannungen in der initialen Konfiguration und den tatsächlichen Statorspannungen wie folgt beschreiben lassen:

$$\begin{pmatrix} u_d \\ u_q \end{pmatrix} = \begin{pmatrix} \cos \Delta\gamma & -\sin \Delta\gamma \\ \sin \Delta\gamma & \cos \Delta\gamma \end{pmatrix} \begin{pmatrix} u_{d_{init}} \\ u_{q_{init}} \end{pmatrix} \qquad (6)$$

$$\begin{pmatrix} u_{d_{init}} \\ u_{q_{init}} \end{pmatrix} = \begin{pmatrix} \cos \Delta\gamma & \sin \Delta\gamma \\ -\sin \Delta\gamma & \cos \Delta\gamma \end{pmatrix} \begin{pmatrix} u_d \\ u_q \end{pmatrix} \qquad (7)$$

Dabei beschreiben $u_{d_{init}}$, $u_{q_{init}}$ die d- bzw. q-Komponente der Statorspannung in der initialen Konfiguration, $u_d$, $u_q$ die d- bzw. q-Komponente der tatsächlichen Statorspannung und $\Delta\gamma$ den Korrekturwert. Es ergibt sich dann aus den Gleichungen (3), (4), (6) und (7)

$$\begin{pmatrix} u_{d_{init}} \\ u_{q_{init}} \end{pmatrix} = \begin{pmatrix} \omega_{el} \cdot \Psi \cdot u_{d_{init}} & \Delta u_d \\ -\Delta u_d & \omega_{el} \cdot \Psi \end{pmatrix} \begin{pmatrix} \sin \Delta\gamma \\ \cos \Delta\gamma \end{pmatrix} \qquad (8)$$

Daraus folgt durch Auflösen von (8) nach $\Delta\gamma_i$ die Gleichung (5). Es sei dazu angemerkt, dass für $\Delta u_d = 0$ die herkömmliche Ermittlung des Korrekturwerts folgt.

Im Rahmen des erfindungsgemäßen Verfahrens können als vorgegebene Statorspannung Soll-Spannungswerte einer Reglungseinheit der Steuerungseinrichtung verwendet werden. Mithin kann auf eine messtechnische Ermittlung der Statorspannung verzichtet werden, da Soll-Spannungswerte mit hinreichender Genauigkeit in der Steuerungseinrichtung selbst vorliegen. Besonders bevorzugt wird die vorgegebene Statorspannung jedoch aus Ausgangssignalen einer Schaltsignale für eine Leistungseinheit eines Wechselrichters bereitstellenden Modulatoreinheit der Steuerungseinrichtung ermittelt. Dies ermöglicht eine zusätzliche Berücksichtigung von Modifikationen der Statorspannung, welche durch die Modulatoreinheit, jedoch nicht durch die Regelungseinheit erfolgen. So kann die Ermittlung des Korrekturwerts noch genauer erfolgen, weil der d-Spannungswert und der q-Spannungswert wesentlich realitätsnäher berücksichtigt werden.

Bevorzugt wird im Rahmen des erfindungsgemäßen Verfahrens eine permanenterregte elektrische Maschine verwendet. Dabei kann der Flusswert den magnetischen Fluss von Permanentmagneten des Rotors beschreiben. Alternativ ist es möglich, dass eine elektrisch erregte elektrische Maschine verwendet wird. Dann ist es zweckmäßig, dass der Flusswert den mit dem Stator verketteten Rotorfluss beschreibt. Bei elektrisch erregten elektrischen Maschine wird es ferner bevorzugt, wenn bei der Ermittlung des Korrekturwerts ein minimaler Erregungsstrom für Rotorwicklungen vorgegeben wird, damit der magnetische Fluss sicher ermittelbar ist.

Besonders bevorzugt wird der Flusswert ferner in Abhängigkeit des d-Spannungswert und des q-Spannungswerts und des Drehzahlwerts ermittelt. So können während der Durchführung des Verfahrens, also quasi online, Veränderungen des magnetischen Flusses berücksichtigt werden, was die Ermittlung des Korrekturwerts weiter präzisiert. In guter Näherung kann der Flusswert gemäß folgender Formel ermittelt werden:

$$\Psi = \frac{\sqrt{u_{d_{init}}^2 + u_{q_{init}}^2}}{\omega_{el}} \qquad (9)$$

Für eine noch präzisere Bestimmung kann der Flusswert in zusätzliche Abhängigkeit des Kalibrierwerts ermittelt werden. Der Flusswert kann dann gemäß folgender Gleichung bestimmt werden:

$$\Psi = \frac{\sqrt{u_{d_{init}}^2 + u_{q_{init}}^2 - \Delta u_d^2}}{\omega_{el}} \qquad (10)$$

Dabei stellt Gleichung (9) eine Näherung der Gleichung (10) für den Fall, dass

$$\Delta u_d \ll u_{d_{init}}^2 + u_{q_{init}}^2 \qquad (11)$$

dar.

Gemäß einer besonders vorteilhaften Weiterbildung kann ein ermittelter Korrekturwert als unzuverlässig verworfen werden, wenn der ermittelte Flusswert über einem vorgegebenen Maximalflusswert liegt und/oder wenn der ermittelte Flusswert unter einem vorgegebenen Minimalflusswert liegt. Ein niedriger Flusswert, der unter dem vorgegebene Minimalflusswert liegt, kann insbesondere darauf hinweisen, dass die Permanentmagnete im Falle der Verwendung einer permanenterregten elektrischen Maschine demagnetisiert sind, insbesondere wenn eine maximal zulässige Magnettemperatur von beispielsweise 140 °C überschritten wurde. In diesem Fall kann der ermittelte Korrekturwert nicht als hinreichend zuverlässig angesehen werden und wird verworfen. Dabei sollte die Statorspannung mit einem hinreichenden Sicherheitsniveau ermittelt werden, beispielsweise durch eine Messung der Statorspannung oder adäquate Sicherheitsmechanismen.

Ein ermittelter Flusswert, der über dem vorgegebenen Maximalflusswert und/oder unter dem vorgegebene Minimalflusswert liegt, kann im Übrigen darauf hindeuten, dass die Statorspannung in Bezug auf den ermittelten magnetischen Fluss unplausibel ist. Dies kann wiederum mit einer zu hohen Magnettemperatur, aber auch mit einer zu geringen Magnettemperatur zusammenhängen, wenn eine Außentemperatur der elektrischen Maschine unterhalb einer zulässigen Außentemperatur von beispielsweise -40 °C liegt. Dabei sollte sichergestellt sein, dass die elektrische Winkelgeschwindigkeit mit einem hinreichenden Sicherheitsniveau ermittelt werden kann.

Besondere Vorteile des erfindungsgemäßen Verfahrens ergeben sich, wenn der d-Spannungswert, der q-Spannungswert und der Drehzahlwert in Abhängigkeit von Mittelwerten jeweiliger Einzelwerte ermittelt werden, die über eine Erfassungsperiode, die eine oder mehrere vollständige elektrische oder mechanische Perioden umfasst, erfasst werden. Dadurch kann der Einfluss von Harmonischen und Subharmonischen, die beispielsweise auf nicht sinusförmige gegenmotorische Kräfte oder Statornutungen zurückgeführt werden können, ausgeglichen werden. Details dazu finden sich in dem Artikel von M. Seilmeier, S. Ebersberger and B. Piepenbreier, "PMSM model for sensorless control considering saturation induced secondary saliencies," 2013 IEEE International Symposium on Sensorless Control for Electrical Drives and Predictive Control of Electrical Drives and Power Electronics (SLED/PRECEDE), Munich, 2013, pp. 1-8.

Um sicherzustellen, dass die Mittelwerte die Eliminierung dieser harmonischen Einflüsse zutreffend ermöglichen, also ein quasi-stationärer Betrieb der elektrischen Maschine angenommen werden darf, können eine einen quasi-stationären Betrieb der elektrischen Maschine während der Erfassung der Einzelwerte prüfende Plausibilitätskontrolle durchgeführt und ein Korrekturwert als unzuverlässig verworfen werden, wenn die Plausibilitätskontrolle eine Verletzung einer vorgegebenen Bedingung für den quasi-stationären Betrieb ergibt.

Im Detail kann dazu vorgesehen sein, dass die Bedingung umfasst, dass zur Ermittlung des Drehzahlwerts verwendete Einzelwerte innerhalb eines vorgegebenen Drehzahlintervalls liegen und/oder dass ein d-Stromwert, der einen Mittelwert von während der Erfassungsperiode erfassten Einzelwerten einer d-Komponente eines Statorstroms beschreibt, und ein q-Stromwert, der einen Mittelwert von während der Erfassungsperiode erfassten Einzelwerten einer d-Komponente des Statorstroms beschreibt, innerhalb eines Null umfassenden Stromintervalls liegen.

Gemäß einer besonders bevorzugten Weiterbildung ist vorgesehen, dass mehrere Korrekturwerte in einer vorgegebenen oder vorgebbaren Anzahl von aufeinander folgenden Ermittlungszyklen ermittelt werden und ein Gesamtkorrekturwert als Mittelwert der in den Ermittlungszyklen ermittelten Korrekturwerte verwendet wird, wenn die Anzahl der im Rahmen der jeweiligen Plausibilitätskontrolle als unzuverlässig verworfenen Korrekturwerte einen vorgegebenen Maximalwert nicht überschreitet und/oder die Abweichung der in den Ermittlungszyklen ermittelten Korrekturwerte voneinander ein vorgegebenes Abweichungsmaß nicht überschreitet. So kann das Zuverlässigkeitsniveau des Gesamtkorrekturwerts noch weiter verbessert werden. Das Abweichungsmaß kann zum Beispiel derart ermittelt werden, dass ein maximaler Wert und ein minimaler Wert der nicht als unzuverlässig ermittelten Korrekturwerte mit dem Mittelwert der nicht als unzuverlässig ermittelten Korrekturwerte verglichen wird, wobei ein Überschreiten von vorgegebenen Schwellwerten um den Mittelwert durch den maximalen Wert und den minimalen Wert zu einer Nichtberücksichtigung als Gesamtkorrekturwert führt. Zweckmäßigerweise wird dann das Verfahren erneut unter Durchführung der aufeinanderfolgenden Ermittlungszyklen durchgeführt.

Zweckmäßigerweise wird nach Ermittlung des Gesamtkorrekturwerts ein korrigierter Offset, der eine Differenz zwischen dem initialen Offset und dem Gesamtkorrekturwert ist, für eine weitere Steuerung der elektrischen Maschine verwendet.

Daneben betrifft die Erfindung eine Steuerungseinrichtung für eine elektrische Maschine, welche dazu eingerichtet ist, einen Nullstrom in Statorwicklungen der elektrischen Maschine einzuprägen und einen Korrekturwert, der eine Winkeldifferenz zwischen einer in einer initialen Konfiguration der Steuerungseinrichtung auf Basis von Rotorlageinformationen eines Rotorlagegebers angenommenen Lage einer d-Achse der elektrischen Maschine und einer tatsächlichen Lage der d-Achse beschreibt, in einem rotierenden Zustand eines Rotors der elektrischen Maschine in Abhängigkeit eines d-Spannungswerts, der eine d-Komponente einer von der Steuerungseinrichtung in der initialen Konfiguration vorgegebenen Statorspannung beschreibt, eines q-Spannungswerts, der einer q-Komponente der von der Steuerungseinrichtung in der initialen Konfiguration vorgegeben Statorspannung beschreibt, eines Flusswerts, der einen magnetischen Fluss des Rotors beschreibt, eines Drehzahlwerts, der die Drehzahl des Rotors im rotierenden Zustand beschreibt, und eines Kalibrierwerts, der einen drehzahlabhängigen Spannungsfehler der d-Komponente der Statorspannung beschreibt, zu ermitteln.

Außerdem betrifft die Erfindung einen Wechselrichter für eine elektrische Maschine, umfassend eine Leistungseinheit, welche dazu eingerichtet ist, eine Eingangsgleichspannung in einen mehrphasigen Wechselstrom für die elektrische Maschine zu wandeln, und eine erfindungsgemäße Steuerungseinrichtung.

Ferner betrifft die Erfindung ein Fahrzeug, umfassend eine zum Antreiben des Fahrzeugs eingerichtete elektrische Maschine und einen erfindungsgemäßen Wechselrichter, der zum Bereitstellen des Wechselstroms an die elektrische Maschine eingerichtet ist.

Schließlich betrifft die Erfindung auch ein Computerprogramm mit Programmcode zur Durchführung eines erfindungsgemäßen Verfahrens, wenn das Computerprogramm auf einer Recheneinrichtung ausgeführt wird.

Sämtliche Ausführung zum erfindungsgemäßen Verfahren lassen sich analog auf die erfindungsgemäße Steuerungseinrichtung, den erfindungsgemäßen Wechselrichter, das erfindungsgemäße Fahrzeug und das erfindungsgemäße Computerprogramm übertragen, sodass auch mit diesen die zuvor genannten Vorteile erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:

Fig. 1    ein Blockschaltbild eines Ausführungsbeispiels des erfindungsgemäßen Fahrzeugs, umfassend ein Ausführungsbeispiel des erfindungsgemäßen Wechselrichters mit einem Ausführungsbeispiel der erfindungsgemäßen Steuerungseinrichtung;

Fig. 2    ein initiales und ein tatsächliches dq-Koordinatensystem beim Betrieb der erfindungsgemäßen Steuerungseinrichtung;

Fig. 3    ein Blockschaltbild einer Korrekturwertermittlungseinheit und einer Schreibeinheit der in Fig. 1 gezeigten Steuerungseinrichtung;

Fig. 4    ein Flussdiagramm eines Ausführungsbeispiels des erfindungsgemäßen Verfahrens; und

Fig. 5    einen exemplarischen Verlauf eines Spannungsfehlers über eine mechanische Drehzahl.

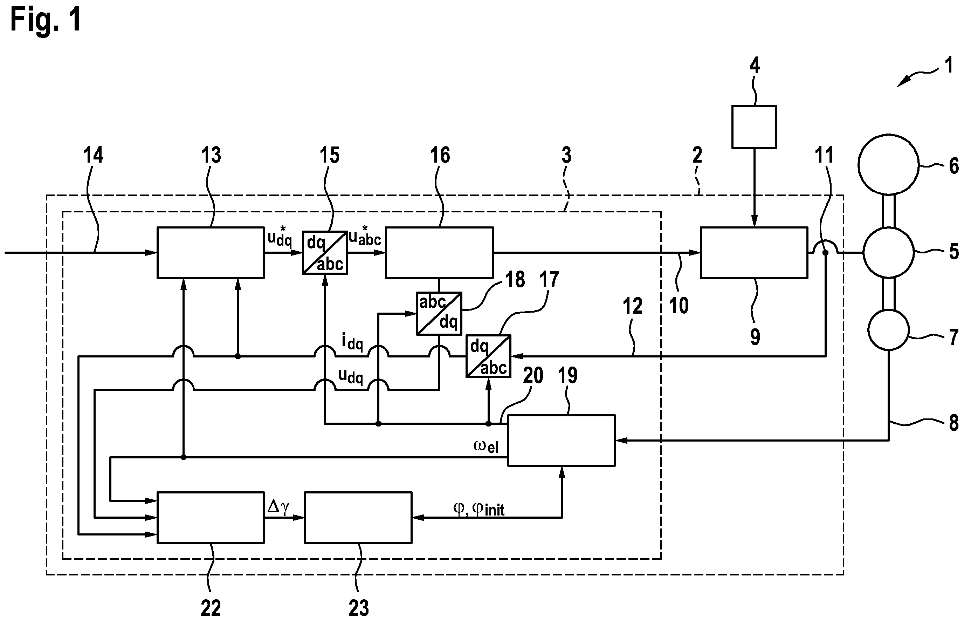

Fig. 1 ist ein Blockschaltbild eines Ausführungsbeispiels eines Fahrzeugs 1, umfassend ein Ausführungsbeispiel eines Wechselrichters 2 mit einem Ausführungsbeispiel einer Steuerungseinrichtung 3.

Das Fahrzeug 1 weist darüber hinaus eine Gleichspannungsquelle 4 in Form einer Hochvoltbatterie sowie eine elektrische Maschine 5 auf, die zum Antreiben des Fahrzeugs 1 durch mechanische Kopplung mit einer Last 6 eingerichtet ist. Die elektrische Maschine 5 ist im vorliegenden Ausführungsbeispiel eine permanenterregte Synchronmaschine. Der elektrischen Maschine 5 ist ein Rotorlagegeber 7, beispielsweise ein Resolver, zugeordnet, welcher zum Bereitstellen einer Rotorlageinformationen 8 an die Steuerungseinrichtung 3 eingerichtet ist.

Der Wechselrichter 2 umfasst neben der Steuerungseinrichtung 3 eine Leistungseinheit 9, welche eine Vielzahl von mittels der Steuerungseinrichtung 3 ansteuerbaren Leistungsschaltelementen aufweist. Anhand von Schaltsignalen 10 der Steuerungseinrichtung 3 wandelt die Leistungseinheit 9 die von der Gleichspannungsquelle 4 bereitgestellte Gleichspannung in einen mehrphasigen Wechselstrom für die elektrische Maschine 5. Außerdem umfasst der Wechselrichter 2 eine Stromerfassungseinheit 11, welche dazu eingerichtet ist, der Steuerungseinrichtung 3 eine Strominformation 12 bereitzustellen, welche Einzelwerte von Statorströmen, die entlang einzelner Phasen des mehrphasigen Wechselstroms fließen, beschreibt.

Die Steuerungseinrichtung 3 umfasst eine Regelungseinheit 13, welche dazu eingerichtet ist, in Abhängigkeit einer extern zugeführten Drehmomentanforderung 14 Soll-Spannungen $u^{*}_{dq}$ in dq-Koordinaten zu ermitteln. Der Regelungseinheit 13 ist eine Transformationseinheit 15 nachgeschaltet, die zum Wandeln der Soll-Spannungen $u^{*}_{dq}$ in Soll-Spannungen $u^{*}_{abc}$ in abc-Koordinaten eingerichtet ist. Die Steuerungseinrichtung 3 weist ferner eine Modulatoreinheit 16 auf, welche dazu eingerichtet ist, von der Regelungseinheit 13 ermittelte Soll-Spannungen, hier die Soll-Spannungen $u^{*}_{abc}$ , in die pulsweitenmodulierten Schaltsignale 10 für die Leistungseinheit 9, gegebenenfalls unter Anwendung von Begrenzungsvorschriften, zu wandeln.

Daneben weist die Steuerungseinrichtung 3 eine weitere Transformationseinheit 17 auf, welche dazu eingerichtet ist, die Strom information 12, welche den Statorstrom in abc-Koordinaten beschreibt, in Einzelwerte des Statorstroms $i_{dq}$ in dq-Koordinaten zu transformieren, welche die Regelungseinheit 13 als Ist-Werte für die Regelung erhält.

Eine weitere Transformationseinheit 18 erhält ein Ausgangssignal der Modulationseinheit 16, welches die durch die Schaltsignale 10 erzeugten Spannungen in abc-Koordinaten beschreibt, und ist zum Wandeln dieser Einzelwerte in Einzelwerte der Statorspannung $u_{dq}$, welche Modifikationen gegenüber den Soll-Spannungen $u_{dq}^*$ berücksichtigen.

Die Steuerungseinrichtung 3 umfasst ferner eine Auswertungseinheit 19, welche dazu eingerichtet ist, aus der Rotorlageinformationen 8 eine elektrische Kreisfrequenz $\omega_{el}$ der Rotorbewegung und eine Lageinformationen 20 zu ermitteln, welche die Lage der d-Achse des dq-Koordinatensystems beschreibt.

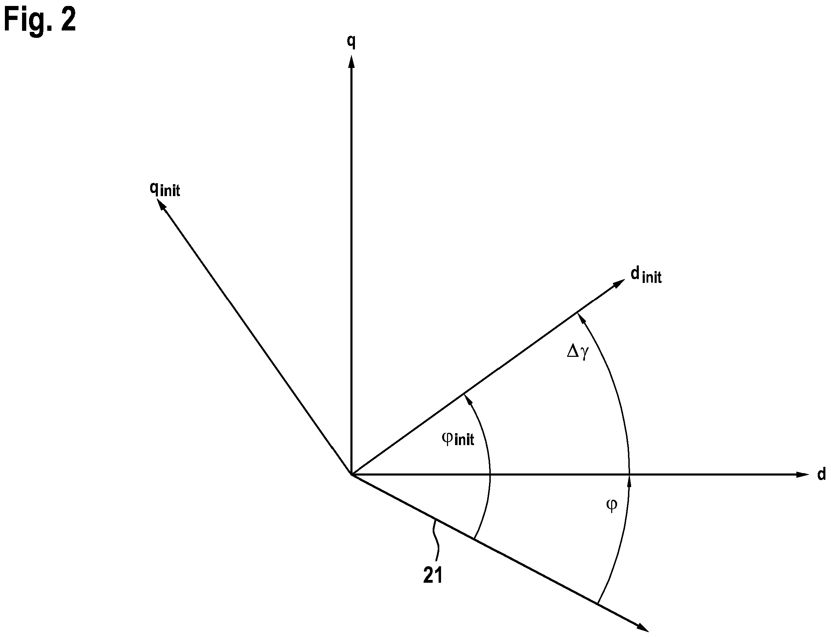

Fig. 2 zeigt ein initiales und ein tatsächliches dq-Koordinatensystem beim Betrieb der Steuerungseinrichtung 3.

In einer initialen Konfiguration der Steuerungseinrichtung, in der ein Versatz einer Nullachse 21 des Rotorlagegebers gegenüber einer mit d gekennzeichneten tatsächlichen Lage d-Achse nicht bekannt ist, wird eine mit $d_{init}$ gekennzeichnete Lage der d-Achse angenommen, die einen initialen Offset $\varphi_{init}$ gegenüber der Nullachse 21 aufweist. Dabei zeigt Fig. 2 auch entsprechende orthogonale q-Achsen, die mit q für die tatsächliche Lage der d-Achse und mit $q_{init}$ für die angenommene Lage der d-Achse gekennzeichnet sind.

Es bedarf folglich der Ermittlung eines Gesamtkorrekturwerts $\Delta\gamma$, der eine Korrektur des initialen Offsets $\varphi_{init}$ hin zu einem der tatsächlichen Lage der d-Achse besser entsprechenden Offset $\varphi$ ermöglicht.

Wieder mit Bezug auf Fig. 1 weist die Steuerungseinrichtung 3 dazu eine Korrekturwertermittlungseinheit 22 zum Ermitteln des Offsets $\varphi$ auf. Mittels einer Schreibeinheit 23 der Steuerungseinrichtung 3 ist die Auswertungseinheit 19 dahingehend konfigurierbar, dass die Lageinformationen 20 nicht mehr auf Basis des initialen Offsets $\varphi_{init}$, sondern anhand des Offsets $\varphi$ ermittelbar ist.

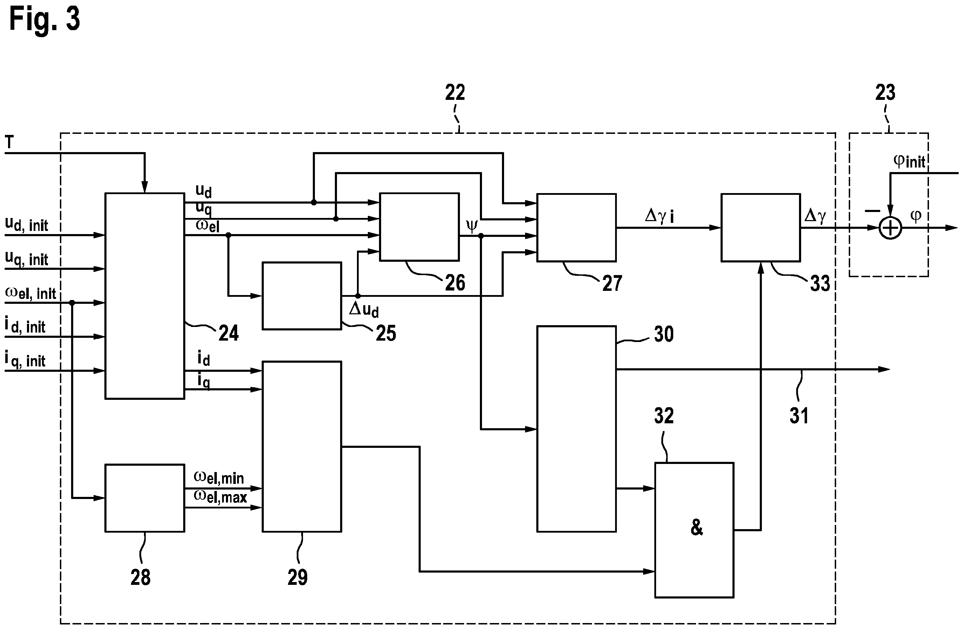

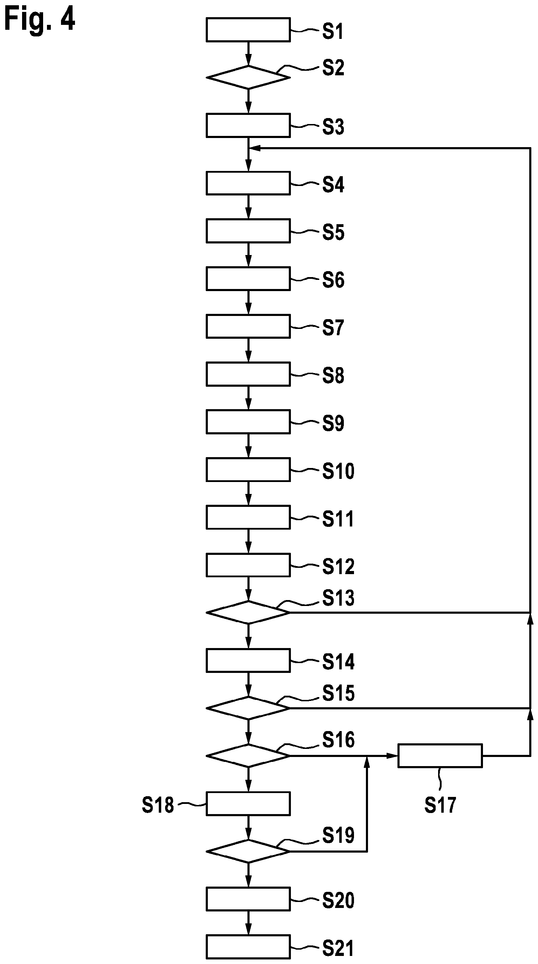

Die Steuerungseinrichtung 3 ist dabei zur Durchführung eines Verfahrens eingerichtet, welches nachfolgend anhand eines in Fig. 3 gezeigten Blockschaltbilds der Korrekturwertermittlungseinheit 22 und der Schreibeinheit 23 und eines in Fig. 4 gezeigten Flussdiagramms des Verfahrens erläutert wird:

In einem Ausgangszustand S1 bei Beginn des Verfahrens fährt das Fahrzeug 1, wobei sich ein Rotor der elektrischen Maschine mit einer bestimmten Drehzahl dreht und sich die Steuerungseinrichtung in der initialen Konfiguration befindet.

In einem Schritt S2 wird zyklisch überprüft, ob die Steuerungseinrichtung 3 ein externes Triggersignal T von einem übergeordneten Steuergerät (nicht gezeigt) des Fahrzeugs 1 erhält, welches die Ermittlung startet. Nach Erhalt des Triggersignals T gibt die Regelungseinheit 13 in einem Schritt S3 die Soll-Spannungen $u_{dq}^*$ derart vor, dass ein Nullstrom in Statorwicklungen der elektrischen Maschine 5 eingeprägt wird.

In einem folgenden Schritt S4 erhält ein Mittelwertbildungsblock 24 der Korrekturwertermittlungseinheit 22 über eine Erfassungsperiode, die eine oder mehrere vollständige elektrische oder mechanische Perioden der elektrischen Maschine 5 umfasst, eine Vielzahl von Einzelwerten einer d-Komponente der Statorspannung $u_{d,init}$ und einer q-Komponente der Statorspannung $u_{q,init}$ jeweils über die Transformationseinheit 18 von der Modulatoreinheit 16. Daneben erhält der Mittelwertbildungsblock 24 Einzelwerte einer d-Komponente des Statorstroms $i_{d,init}$ und einer q-Komponente des Statorstroms $i_{q,init}$ jeweils über die Transformationseinheit 17 von der Stromerfassungseinheit 11. Außerdem erhält der erste Mittelwertbildungsblock 24 Einzelwerte der elektrischen Kreisfrequenz $\omega_{el,init}$ von der Auswertungseinheit 19. In einem folgenden Schritt S5 erzeugt der Mittelwertbildungsblock 24 durch Mittelung über die Dauer der Erfassungsperiode aus den jeweiligen Einzelwerten einen d-Spannungswert $u_d$, einen q-Spannungswert $u_q$, einen Drehzahlwert $\omega_{el}$, einen d-Stromwert $i_d$ sowie einen q-Stromwert $i_q$.

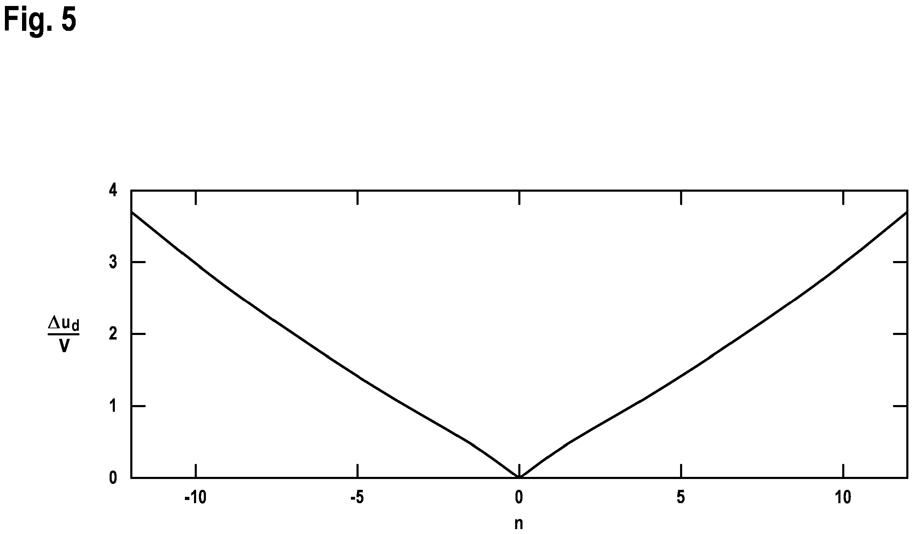

In einem folgenden Schritt S6 ermittelt ein Kalibrierwertermittlungsblock 25 der Korrekturwertermittlungseinheit 22 aus dem Drehzahlwert $\omega_{el}$ einen Kalibrierwert $\Delta u_d$, der einen drehzahlabhängigen Spannungsfehler der d-Komponente der Statorspannung beschreibt. Dazu liest der Kalibrierwertermittlungsblock 25 anhand des Drehzahlwerts $\omega_{el}$ ein abgespeichertes Kennfeld, das Drehzahlen der elektrischen Maschine 5 jeweils einen Kalibrierwert zuordnet, aus. Fig. 5 zeigt exemplarischen Verlauf eines Spannungsfehlers, welcher durch den Kalibrierwert $\Delta u_d$ beschrieben wird, über eine mechanische Drehzahl. Der Spannungsfehler resultiert dabei aus Eisenverlusten und Timingfehlern und ist für den Typ der elektrischen Maschine 5 und den Typ des Wechselrichters 2 vor Beginn des Verfahren bestimmt und in einem Speicher (nicht gezeigt) der Steuerungseinrichtung 3 abgelegt worden.

In einem anschließenden Schritt S7 ermittelt ein Flusswertermittlungsblock 26 der Korrekturwertermittlungseinheit 22 aus dem d-Spannungswert $u_d$, dem q-Spannungswert $u_q$, dem Drehzahlwert $\omega_{el}$ und dem Kalibrierwert $\Delta u_d$ gemäß der Gleichung

$$\Psi = \frac{\sqrt{u_d^2 + u_q^2 - \Delta u_d^2}}{\omega_{el}}$$

einen Flusswert $\Psi$, der einen magnetischen Fluss der Permanentmagnete des Rotors beschreibt.

Nachfolgend wird in einem Schritt S8 aus dem d-Spannungswert $u_d$, dem q-Spannungswert $u_q$, dem Flusswert

$\Psi$, dem Drehzahlwert $\omega_{el}$ und dem Kalibrierwert $\Delta u_d$ durch einen Korrekturwertberechnungsblock 27 ein Korrekturwert $\Delta \gamma_i$ gemäß der Gleichung

$$\Delta \gamma_i = atan2\left(\omega_{el} \cdot \Psi \cdot u_d - \Delta u_d \cdot u_q, \Delta u_d \cdot u_d + \omega_{el} \cdot \Psi \cdot u_q\right)$$

berechnet.

Anschließend an den Schritt S8 oder parallel zu den Schritten S5 bis S8 ermittelt ein Extremwertermittlungsblock 28 der Korrekturwertermittlungseinheit 22 in einem Schritt S9 einen während der Erfassungsperiode auftretenden Minimalwert der Einzelwerte der elektrischen Kreisfrequenz $\omega_{el,min}$ und einen während der Erfassungsperiode auftretenden Maximalwert der Einzelwerte elektrischen Kreisfrequenz $\omega_{el,max}$. In einem folgenden Schritt S10, der ebenfalls parallel zu den Schritten S5 bis S8 durchgeführt werden kann, prüft ein Plausibilitätskontrollblock 29 der Korrekturwertermittlungseinheit 22 eine Bedingung für einen quasistationären Betrieb der elektrischen Maschine 5 während der Erfassungsperiode. Dazu wird einerseits anhand des Minimalwerts $\omega_{el,min}$ und des Maximalwerts $\omega_{el,max}$, ermittelt ob die während der Erfassungsperiode erfassten Einzelwerte innerhalb eines vorgegebenen Drehzahlintervalls liegen und andererseits, ob der d-Stromwert $i_d$ und der q-Stromwert $i_q$ innerhalb eines Null umfassenden Stromintervalls liegen.

Anschließend an den Schritt S10 wird in einem Schritt S11, der alternativ auch parallel zu den Schritten S7 und S8 durchgeführt werden kann, durch einen Flusswertprüfungsblock 30 der Korrekturwertermittlungseinheit 22 überprüft, ob der ermittelte Flusswert $\Psi$ unter einem vorgegebenen Maximalflusswert und über einem vorgegebenen Minimalflusswert liegt. Liegt der ermittelte Flusswert $\Psi$ unter dem Minimalflusswert, gibt der Flusswertprüfungsblock 30 zusätzlich eine eine Demagnetisierung der Permanentmagnete anzeigende Demagnetisierungsinformation 31 aus.

Die im Folgenden beschriebenen anschließenden Schritte S12 bis S19 werden von einem Gesamtkorrekturwertberechnungsblock 33 der Korrekturwertermittlungseinheit 22 durchgeführt. Im Schritt S12 wird ein erster Zähler, der die Anzahl der ermittelten Korrekturwerte $\Delta \gamma_i$ zählt, inkrementiert. Anschließend wird in einem Schritt S13 ausgewertet, ob die in den Schritten S10 und S11 geprüften und durch einen Logikblock 32 kumulativ verknüpfen Bedingungen erfüllt sind. Ist dies nicht der Fall, wird der ermittelte Korrekturwert $\Delta \gamma_i$ als unzuverlässig erachtet und durch einen Rücksprung zum Schritt S4 ein neuer Korrekturwert $\Delta \gamma_{i+1}$ ermittelt.

Ist die Auswertung im Schritt S13 positiv, kann der Korrekturwert $\Delta \gamma_i$ als zuverlässig erachtet werden, sodass in einem anschließenden Schritt S14 ein zweiter Zähler, der die Anzahl zuverlässiger Korrekturwerte $\Delta \gamma_i$ zählt, inkrementiert und der Korrekturwert $\Delta \gamma_i$ gespeichert. In einem Schritt S15 wird anschließend ausgewertet, ob der erste Zähler einen vorgegebenen Wert von beispielsweise zwanzig Korrekturwertermittlungen erreicht hat. Ist dies nicht der Fall, erfolgt ein Rücksprung zum Schritt S4, so dass ein weiterer $\Delta \gamma_{i+1}$ ermittelt wird.

Ergibt die Auswertung im Schritt S15, dass ausreichend viele Korrekturwertermittlungen durchgeführt wurden, wird in einem Schritt S16 ausgewertet, ob der zweite Zähler einen vorgegebenen Mindestwert von beispielsweise achtzehn als zuverlässig erachteten Korrekturwerten $\Delta \gamma_i$ aufweist. Ist dies nicht der Fall, werden in einem Schritt S17 die Zähler zurückgesetzt und bisher gespeicherte Korrekturwerte $\Delta \gamma_i$ gelöscht. Es erfolgt dann ein Rücksprung in den Schritt S4 um erneut einen Satz von Korrekturwerten $\Delta \gamma_i$ zu ermittelt.

Ist die Auswertung im Schritt S16 erfolgreich, wird in einem Schritt S18 ein Mittelwert der abgespeicherten, also als zuverlässig erachteten, Korrekturwerte $\Delta \gamma_i$ ermittelt. In einem Schritt S19 wird ein Abweichungsmaß für den Mittelwert ausgewertet, indem überprüft wird, ob ein Minimalwert und ein Maximalwert der Korrekturwerte $\Delta \gamma_i$ innerhalb eines um den Mittelwert definierten Intervalls liegen. Ist dies nicht der Fall, erfolgt ein Sprung zum Schritt S17 und es wird ein neuer Satz von Korrekturwerten $\Delta \gamma_i$ ermittelt. Ist die Auswertung im Schritt S19 positiv, wird der Mittelwert in einem Schritt S20 als Gesamtkorrekturwert $\Delta \gamma$ an die Schreibeinheit 23 ausgegeben.

Die Schreibeinheit 23 ermittelt in einem Schritt S21 aus dem initialen Offset $\varphi_{init}$ und dem Gesamtkorrekturwert $\Delta \gamma$ durch Differenzbildung den Offset $\varphi$ und schriebt diesen in die Auswerteeinheit 19, womit das Verfahren beendet ist.

Im weiteren Betrieb der elektrischen Maschine 5 bzw. des Fahrzeugs 1 wird mithin die Lageinformation 20 wesentlich präziser anhand des Offsets $\varphi$ ermittelt, was eine genauere Regelung der elektrischen Maschine 5 ermöglicht. Das Verfahren wird erstmalig unmittelbar nach einer Erstinbetriebnahme des Fahrzeugs 1 durchgeführt, um den werksseitig vorgegebenen initialen Offset $\varphi_{init}$ möglichst schnell zu korrigieren. Danach wird das Verfahren erneut durch das Triggersignal T gestartet, beispielsweise wenn nach einer Wartung oder Reparatur des Fahrzeugs 1 oder nach Ablauf einer vorgegebenen Nutzung des Fahrzeugs das Bedürfnis nach einer Überprüfung der Zuverlässigkeit des Offsets $\varphi$, der bei einer erneuten Durchführung als initialer Offset $\varphi_{init}$ verwendet wird, besteht.

Gemäß weiteren Ausführungsbeispielen ist die elektrische Maschine 5 eine elektrisch erregte Synchronmaschine. In diesem Fall beschreibt der Flusswert $\Psi$ den mit dem Stator verketteten Rotorfluss bei einem Statorstrom vom Wert null und die Demagnetisierungsinformation 31 entfällt.

Gemäß einem weiteren Ausführungsbeispiel wird auf die Mittelwertbildung durch den Gesamtkorrekturwertberechnungsblock 33 in den Schritten S11 bis S18 verzichtet und ein als zuverlässig ermittelter Korrekturwert $\Delta \gamma_i$ zur Korrektur des initialen Offsets $\varphi_{init}$ an die Schreibeinheit 23 ausgegeben.

Gemäß einem weiteren Ausführungsbeispiel wird die elektrische Maschine 5 im Schritt S1 auf einem Prüfstand, beispielsweise im Rahmen eines End-Of-Line-Test, gegen eine Lastmaschine mit einer vorgegebenen Drehzahl betrieben. Die Ermittlung des Kalibrierwerts $\Delta u_d$ entfällt zugunsten eines fest für die Drehzahl vorgegebenen Kalibrierwerts $\Delta u_d$. Dabei können dann die Schritte S4, S5, S9 und S10 entfallen sowie als d-Spannungswert, q-Spannungswert und Drehzahlwert Einzelwerte verwendet werden.

Gemäß einem weiteren Ausführungsbeispiel erfolgt nach dem Schritt S17 kein Rücksprung, sondern es wird ein Signal, welches eine nicht erfolgreiche Ermittlung anzeigt, an das übergeordnete Steuergerät (nicht gezeigt) ausgegeben. Das Fahrzeugsteuergerät kann dann erneut das Triggersignal T ausgeben.

## Patentansprüche

1. Verfahren zur Ermittlung eines Korrekturwerts ($\Delta_\gamma$) für eine Steuerungseinrichtung (3) für eine elektrische Maschine (5), wobei der Korrekturwert eine Winkeldifferenz zwischen einer in einer initialen Konfiguration der Steuerungseinrichtung (3) auf Basis von Rotorlageinformationen (8) eines Rotorlagegebers (7) angenommenen Lage einer d-Achse der elektrischen Maschine (5) und einer tatsächlichen Lage der d-Achse beschreibt, wobei ein Nullstrom in Statorwicklungen der elektrischen Maschine eingeprägt und der Korrekturwert in einem rotierenden Zustand eines Rotors der elektrischen Maschine (5) in Abhängigkeit

   - eines d-Spannungswerts ($u_d$), der eine d-Komponente einer von der Steuerungseinrichtung (3) in der initialen Konfiguration vorgegebenen Statorspannung beschreibt, und
   - eines q-Spannungswerts ($u_q$), der einer q-Komponente der von der Steuerungseinrichtung (3) in der initialen Konfiguration vorgegeben Statorspannung beschreibt,
   ermittelt wird,

   **dadurch gekennzeichnet,**
   **dass** der Korrekturwert ($\Delta_\gamma$) im rotierenden Zustand des Rotors der elektrischen Maschine (5) in weiterer Abhängigkeit

   - eines Flusswerts ($\Psi$), der einen magnetischen Fluss des Rotors beschreibt,
   - eines Drehzahlwerts ($\omega_{el}$), der die Drehzahl des Rotors im rotierenden Zustand beschreibt, und
   - eines Kalibrierwerts ($\Delta_{ud}$), der einen drehzahlabhängigen Spannungsfehler der d-Komponente ($u_d$) der Statorspannung beschreibt, ermittelt wird.

2. Verfahren nach Anspruch 1, wobei der Kalibrierwert anhand des Drehzahlwerts aus einem abgespeicherten Kennfeld, das Drehzahlen der elektrischen Maschine (5) jeweils einen Kalibrierwert zuordnet, ausgelesen wird oder für eine Drehzahl im rotierenden Zustand des Rotors fest vorgegeben ist.

3. Verfahren nach Anspruch 1 oder 2, wobei zum Ermitteln des Korrekturwerts die folgende Gleichung ausgewertet wird:

$$\Delta \gamma = atan\big(\omega_{el} \cdot \Psi \cdot u_d - \Delta u_d \cdot u_q, \Delta u_d \cdot u_d + \omega_{el} \cdot \Psi \cdot u_q\big),$$

   wobei

   - *atan(x,y)* eine Arcustangensfunktion oder Arcuscotangensfunktion, insbesondere $arctan\left(\frac{x}{y}\right)$ oder $arccot\left(\frac{y}{x}\right)$ oder *atan*2(x,y) oder *acot*2(y,x), beschreibt
   - $u_d$ den d-Spannungswert beschreibt,
   - $u_q$ den q-Spannungswert beschreibt,
   - $\Psi$ den Flusswert beschreibt,
   - $\omega_{el}$ den Drehzahlwert beschreibt und
   - $\Delta u_d$ den Kalibrierwert beschreibt.

4. Verfahren nach einem der vorhergehenden Ansprüche, wobei als vorgegebene Statorspannung Soll-Spannungswerte einer Regelungseinheit (13) der Steuerungseinrichtung (3) verwendet wird oder die vorgegebene Statorspannung aus Ausgangssignalen einer Schaltsignale für eine Leistungseinheit (9) eines Wechselrichters (2) bereitstellenden Modulatoreinheit (16) der Steuerungseinrichtung (3) ermittelt wird.

**5.** Verfahren nach einem der vorhergehenden Ansprüche, wobei eine permanenterregte elektrische Maschine (5) verwendet wird und der Flusswert den magnetischen Fluss von Permanentmagneten des Rotors beschreibt, oder wobei eine elektrisch erregte elektrische Maschine (5) verwendet wird und der Flusswert den mit dem Stator verketteten Rotorfluss beschreibt.

**6.** Verfahren nach einem der vorhergehenden Ansprüche, wobei der Flusswert in Abhängigkeit des d-Spannungswerts und des q-Spannungswerts und des Drehzahlwerts, insbesondere in zusätzlicher Abhängigkeit des Kalibrierwerts, ermittelt wird.

**7.** Verfahren nach Anspruch 6, wobei ein ermittelter Korrekturwert als unzuverlässig verworfen wird, wenn der ermittelte Flusswert über einem vorgegebenen Maximalflusswert liegt und/oder wenn der ermittelte Flusswert unter einem vorgegebenen Minimalflusswert liegt.

**8.** Verfahren nach einem der vorhergehenden Ansprüche, wobei der d-Spannungswert, der q-Spannungswert und der Drehzahlwert in Abhängigkeit von Mittelwerten jeweiliger Einzelwerte ermittelt werden, die über eine Erfassungsperiode, die eine oder mehrere vollständige elektrische oder mechanische Perioden umfasst, erfasst werden.

**9.** Verfahren nach Anspruch 8, wobei eine einen quasi-stationären Betrieb der elektrischen Maschine (5) während der Erfassung der Einzelwerte prüfende Plausibilitätskontrolle durchgeführt und ein Korrekturwert als unzuverlässig verworfen wird, wenn die Plausibilitätskontrolle eine Verletzung einer vorgegebenen Bedingung für den quasi-stationären Betrieb ergibt.

**10.** Verfahren nach Anspruch 9, wobei die Bedingung umfasst, dass zur Ermittlung des Drehzahlwerts verwendete Einzelwerte innerhalb eines vorgegebenen Drehzahlintervalls liegen und/oder dass ein d-Stromwert, der einen Mittelwert von während der Erfassungsperiode erfassten Einzelwerten einer d-Komponente eines Statorstroms beschreibt, und ein q-Stromwert, der einen Mittelwert von während der Erfassungsperiode erfassten Einzelwerten einer d-Komponente des Statorstroms beschreibt, innerhalb eines Null umfassenden Stromintervalls liegen.

**11.** Verfahren nach Anspruch 9 oder 10, wobei mehrere Korrekturwerte in einer vorgegebenen oder vorgebbaren Anzahl von aufeinander folgenden Ermittlungszyklen ermittelt werden und ein Gesamtkorrekturwert als Mittelwert der in den Ermittlungszyklen ermittelten Korrekturwerte verwendet wird, wenn

- die Anzahl der im Rahmen der jeweiligen Plausibilitätskontrolle als unzuverlässig verworfenen Korrekturwerte einen vorgegebenen Maximalwert nicht überschreitet und/oder
- die Abweichung der in den Ermittlungszyklen ermittelten Korrekturwerte voneinander ein vorgegebenes Abweichungsmaß nicht überschreitet.

**12.** Steuerungseinrichtung (3) für eine elektrische Maschine (5), welche dazu eingerichtet ist, einen Nullstrom in Statorwicklungen der elektrischen Maschine (5) einzuprägen und einen Korrekturwert $\Delta_v$, der eine Winkeldifferenz zwischen einer in einer initialen Konfiguration der Steuerungseinrichtung (3) auf Basis von Rotorlageinformationen (8) eines Rotorlagegebers (7) angenommenen Lage einer d-Achse der elektrischen Maschine (5) und einer tatsächlichen Lage der d-Achse beschreibt, in einem rotierenden Zustand eines Rotors der elektrischen Maschine (5) in Abhängigkeit

- eines d-Spannungswerts ($u_d$), der eine d-Komponente einer von der Steuerungseinrichtung (3) in der initialen Konfiguration vorgegebenen Statorspannung beschreibt,
- eines q-Spannungswerts ($u_q$), der einer q-Komponente der von der Steuerungseinrichtung (3) in der initialen Konfiguration vorgegeben Statorspannung beschreibt, und
zu ermitteln,

**dadurch gekennzeichnet,**
**dass** die Steuerungseinrichtung (3) dazu eingerichtet ist, den Korrekturwert ($\Delta_\gamma$) im rotierenden Zustand des Rotors der elektrischen Maschine (5) in weiterer Abhängigkeit

- eines Flusswerts ($\Psi$), der einen magnetischen Fluss des Rotors beschreibt,
- eines Drehzahlwerts ($\omega_{el}$), der die Drehzahl des Rotors im rotierenden Zustand beschreibt, und
- eines Kalibrierwerts ($\Delta_{ud}$), der einen drehzahlabhängigen Spannungsfehler der d-Komponente ($u_d$) der Statorspannung beschreibt, zu ermitteln.

13. Wechselrichter (2) für eine elektrische Maschine (5), umfassend eine Leistungseinheit (9), welche dazu eingerichtet ist eine Eingangsgleichspannung in einen mehrphasigen Wechselstrom für die elektrische Maschine (5) zu wandeln, und eine Steuerungseinrichtung nach Anspruch 12.

14. Fahrzeug (1), umfassend eine zum Antreiben des Fahrzeugs (1) eingerichtete elektrische Maschine (5) und einen Wechselrichter (2) nach Anspruch 13, der zum Bereitstellen des Wechselstroms an die elektrische Maschine (5) eingerichtet ist.

15. Computerprogramm mit Programmcode zur Durchführung eines Verfahrens nach den Ansprüchen 1 bis 11, wenn das Computerprogramm auf der Steuerungseinrichtung nach Anspruch 12 ausgeführt wird.

**Claims**

1. Method for determining a correction value ($\Delta\gamma$) for a control device (3) for an electric machine (5), wherein the correction value describes an angular difference between a position of a d-axis of the electric machine (5) assumed in an initial configuration of the control device (3) on the basis of rotor position information (8) of a rotor position encoder (7) and an actual position of the d-axis, wherein a zero current is impressed in stator windings of the electric machine and the correction value is determined in a rotating state of a rotor of the electric machine (5) depending on

   - a d-voltage value ($u_d$), which describes a d-component of a stator voltage predetermined by the control device (3) in the initial configuration, and
   - a q-voltage value ($u_q$), which describes a q-component of the stator voltage predetermined by the control device (3) in the initial configuration,

   **characterized**
   **in that** the correction value ($\Delta\gamma$) is determined in the rotating state of the rotor of the electric machine (5) further depending on

   - a flux value ($\psi$), which describes a magnetic flux of the rotor,
   - a rotational speed value ($\omega_{el}$), which describes the rotational speed of the rotor in the rotating state, and
   - a calibration value ($\Delta u_d$), which describes a rotational speed-dependent voltage error of the d-component ($u_d$) of the stator voltage.

2. Method according to Claim 1, wherein the calibration value is read on the basis of the rotational speed value from a stored characteristic field which assigns a respective calibration value to rotational speeds of the electric machine (5) or is fixedly predetermined for a rotational speed in the rotating state of the rotor.

3. Method according to Claim 1 or 2, wherein the following equation is evaluated for the purpose of determining the correction value:

$$\Delta\gamma = atan\big(\omega_{el} \cdot \psi \cdot u_d - \Delta u_d \cdot u_q, \Delta u_d \cdot u_d + \omega_{el} \cdot \psi \cdot u_q\big)$$

   where

   - $atan(x,y)$ describes an arc tangent function or arc cotangent function, in particular $arctan\left(\frac{x}{y}\right)$ or $arccot\left(\frac{y}{x}\right)$ or $atan2(x,y)$ or $acot2(y,x)$,
   - $u_d$ describes the d-voltage value,
   - $u_q$ describes the q-voltage value,
   - $\psi$ describes the flux value,
   - $\omega_{el}$ describes the rotational speed value and
   - $\Delta u_d$ describes the calibration value.

4. Method according to any one of the preceding claims, wherein target voltage values of a regulating unit (13) of the control device (3) are used as predetermined stator voltage or the predetermined stator voltage is determined from output signals of a modulator unit (16) of the control device (3) providing switching signals for a power unit (9) of an inverter (2).

5. Method according to any one of the preceding claims, wherein a permanently excited electric machine (5) is used and the flux value describes the magnetic flux of permanent magnets of the rotor, or wherein an electrically excited electric machine (5) is used and the flux value describes the rotor flux linked to the stator.

6. Method according to any one of the preceding claims, wherein the flux value is determined depending on the d-voltage value and the q-voltage value and the rotational speed value, in particular with additional dependence on the calibration value.

7. Method according to Claim 6, wherein a determined correction value is discarded as unreliable should the determined flux value be above a predetermined maximum flux value and/or should the determined flux value be below a predetermined minimum flux value.

8. Method according to any one of the preceding claims, wherein the d-voltage value, the q-voltage value and the rotational speed value are determined depending on mean values of respective individual values recorded over a recording period comprising one or more complete electrical or mechanical periods.

9. Method according to Claim 8, wherein a plausibility check testing a quasi-stationary operation of the electric machine (5) while the individual values are recorded is carried out, and a correction value is discarded as unreliable if the plausibility check yields an infringement of a predetermined condition for the quasi-stationary operation.

10. Method according to Claim 9, wherein the condition comprises that individual values used to determine the rotational speed value are within a predetermined rotational speed interval and/or that a d-current value describing a mean value of individual values of a d-component of a stator current recorded during the recording period and a q-current value describing a mean value of individual values of a d-component of the stator current recorded during the recording period are within a current interval that comprises zero.

11. Method according to Claim 9 or 10, wherein a plurality of correction values are determined in a predetermined or predeterminable number of successive determination cycles and an overall correction value is used as mean value of the correction values determined in the determination cycles if

- the number of correction values discarded as unreliable within the scope of the respective plausibility check does not exceed a predetermined maximum value and/or
- the deviation from one another of the correction values determined in the determination cycles does not exceed a predetermined deviation measure.

12. Control device (3) for an electric machine (5) configured to impress a zero current in stator windings of the electric machine (5) and to determine a correction value ($\Delta\gamma$), which describes an angular difference between a position of a d-axis of the electric machine (5) assumed in an initial configuration of the control device (3) on the basis of rotor position information (8) of a rotor position encoder (7) and an actual position of the d-axis, in a rotating state of a rotor of the electric machine (5) depending on

- a d-voltage value ($u_d$), which describes a d-component of a stator voltage predetermined by the control device (3) in the initial configuration, and
- a q-voltage value ($u_q$), which describes a q-component of the stator voltage predetermined by the control device (3) in the initial configuration,

**characterized**
**in that** the control device (3) is configured to determine the correction value ($\Delta\gamma$) in the rotating state of the rotor of the electric machine (5) further depending on

- a flux value ($\psi$), which describes a magnetic flux of the rotor,
- a rotational speed value ($\omega_{el}$), which describes the rotational speed of the rotor in the rotating state, and
- a calibration value ($\Delta u_d$), which describes a rotational speed-dependent voltage error of the d-component ($u_d$) of the stator voltage.

13. Inverter (2) for an electric machine (5), comprising a power unit (9) configured to convert an input DC voltage into a polyphase alternating current for the electric machine (5), and a control device according to Claim 12.

14. Vehicle (1), comprising an electric machine (5) configured to drive the vehicle (1) and an inverter (2) according to Claim 13, the said inverter being configured to provide the alternating current for the electric machine (5).

15. Computer program having program code for carrying out a method according to Claims 1 to 11 when the computer program is executed on the control device according to Claim 12.

**Revendications**

1. Procédé pour déterminer une valeur de correction ($\Delta_\gamma$) pour une unité de commande (3) de machine électrique (5), la valeur de correction décrivant une différence angulaire entre une position d'un axe d de la machine électrique (5) supposée dans une configuration initiale de l'unité de commande (3) sur la base des informations de position de rotor (8) d'un capteur de position de rotor (7), et une position réelle de l'axe d, dans lequel un courant nul est injecté dans les bobinages de stator de la machine électrique et dans lequel la valeur de correction est déterminée dans un état en rotation d'un rotor de la machine électrique (5) en fonction de :

- une valeur de tension d ($u_d$) décrivant une composante d d'une tension de stator prédéfinie par l'unité de commande (3) dans la configuration initiale ; et
- une valeur de tension q ($u_q$) décrivant une composante q de la tension de stator prédéfinie par l'unité de commande (3) dans la configuration initiale ;

**caractérisé en ce que** :
la valeur de correction ($\Delta_\gamma$) dans l'état en rotation du rotor de la machine électrique (5) est en sus déterminée en fonction de :

- une valeur de flux qui ($\psi$) décrit un flux magnétique du rotor ;
- une valeur de vitesse de rotation ($\omega_{el}$) qui décrit la vitesse de rotation du rotor dans l'état en rotation ; et
- une valeur d'étalonnage ($\Delta_{ud}$) qui décrit une erreur de tension dépendant de la vitesse de rotation pour la composante d ($u_d$) de la tension de stator.

2. Procédé selon la revendication 1, dans lequel la valeur d'étalonnage est sélectionnée sur la base de la valeur de vitesse de rotation à partir d'un champ caractéristique mis en mémoire qui associe respectivement une valeur d'étalonnage aux vitesses de rotation de la machine électrique (5) ou qui est prédéfinie fixement pour une vitesse de rotation dans l'état en rotation du rotor.

3. Procédé selon la revendication 1 ou 2, dans lequel la détermination de la valeur de correction fait appel à l'évaluation de l'équation suivante :

$$\Delta\gamma = atan\big(\omega_{el} \cdot \Psi \cdot u_d - \Delta u_d \cdot u_q, \Delta u_d \cdot u_d + \omega_{el} \cdot \Psi \cdot u_q\big),$$

où :

- atan(x,y) décrit une fonction d'arc tangente ou une fonction d'arc cotangente, notamment $\arctan\left(\frac{x}{y}\right)$ ou arccot $\left(\frac{y}{x}\right)$ ou atan2(x,y) ou acot2(y,x) ;
- $u_d$ décrit la valeur de tension d ;
- $u_q$ décrit la valeur de tension q ;
- $\psi$ décrit la valeur de flux ;
- $\omega_{el}$ décrit la valeur de vitesse de rotation ; et
- $\Delta u_d$ décrit la valeur d'étalonnage.

4. Procédé selon l'une quelconque des revendications précédentes, dans lequel des valeurs de tension de consigne d'une unité de régulation (13) de l'unité de commande (3) sont utilisées comme la tension de stator prédéfinie ou la tension de stator prédéfinie est déterminée à partir des signaux de sortie d'une unité de modulation (16) de l'unité de commande (3) mettant à disposition des signaux de commutation pour une unité de puissance (9) d'un onduleur (2).

5. Procédé selon l'une quelconque des revendications précédentes, dans lequel une machine électrique (5) à excitation permanente est utilisée et dans lequel la valeur de flux décrit le flux magnétique provenant de l'aimant permanent du rotor ou dans lequel c'est une machine électrique (5) excitée électriquement qui est utilisée et dans lequel la valeur de flux décrit le flux du rotor totalisé avec le stator.

6. Procédé selon l'une quelconque des revendications précédentes, dans lequel la valeur de flux est déterminée en fonction de la valeur de tension d et de la valeur de tension q et de la valeur de vitesse de rotation, notamment en sus en fonction de la valeur d'étalonnage.

7. Procédé selon la revendication 6, dans lequel une valeur de correction déterminée est rejetée comme non fiable lorsque la valeur de flux déterminée se situe au-delà d'une valeur de flux maximale prédéfinie et/ou lorsque la valeur de flux déterminée se situe en deçà d'une valeur de flux minimale prédéfinie.

8. Procédé selon l'une quelconque des revendications précédentes, dans lequel la valeur de tension d, la valeur de tension q et la valeur de vitesse de rotation sont déterminées en fonction de valeurs moyennes de valeurs individuelles respectives qui sont acquises sur une période d'acquisition comprenant une ou plusieurs périodes électriques ou mécaniques entières.

9. Procédé selon la revendication 8, dans lequel un contrôle de plausibilité testant un fonctionnement quasi stationnaire de la machine électrique (5) est réalisé pendant l'acquisition des valeurs individuelles et une valeur de correction est rejetée comme non fiable lorsque le contrôle de plausibilité révèle une violation d'une condition prédéfinie du fonctionnement quasi stationnaire.

10. Procédé selon la revendication 9, dans lequel la condition comprend que pour déterminer la valeur de vitesse de rotation, les valeurs individuelles utilisées se situent à l'intérieur d'un intervalle de vitesse de rotation prédéfini et/ou qu'une valeur de courant d qui décrit une valeur moyenne de valeurs individuelles d'une composante d d'un courant de stator acquises pendant la période d'acquisition et une valeur de courant q qui décrit une valeur moyenne de valeurs individuelles d'une composante d du courant de stator acquises pendant la période d'acquisition se situent à l'intérieur d'un intervalle de courant incluant zéro.

11. Procédé selon la revendication 9 ou 10, dans lequel une pluralité de valeurs de correction est déterminée au cours d'un nombre prédéfini ou prédéfinissable de cycles de détermination successifs et une valeur de correction totale est utilisée comme valeur moyenne des valeurs de correction déterminées au cours des cycles de détermination lorsque :

   - le nombre des valeurs de correction rejetées comme non fiables dans le cadre du contrôle de plausibilité respectif ne dépasse pas une valeur maximale prédéfinie ; et/ou
   - l'écart entre les valeurs de correction déterminées dans les cycles de détermination ne dépasse pas un degré d'écart prédéfini.

12. Unité de commande (3) pour une machine électrique (5) qui est conçue pour injecter un courant nul dans les bobinages de stator de la machine électrique (5) et pour déterminer une valeur de correction ($\Delta_\gamma$) décrivant une différence angulaire entre une position d'un axe d de la machine électrique (5) supposée dans une configuration initiale de l'unité de commande (3) sur la base des informations de position de rotor (8) d'un capteur de position de rotor (7) et une position réelle de l'axe d, dans un état en rotation d'un rotor de la machine électrique (5) en fonction de :

   - une valeur de tension d ($u_d$) qui décrit une composante d d'une tension de stator prédéfinie par l'unité de commande (3) dans la configuration initiale ;
   - une valeur de tension q ($u_q$) qui décrit une composante q d'une tension de stator prédéfinie par l'unité de commande (3) dans la configuration initiale ; et **caractérisée en ce que** :
   l'unité de commande (3) est conçue pour décrire la valeur de correction ($\Delta_\gamma$) dans l'état en rotation du rotor de la machine électrique (5) en sus en fonction de :

      - une valeur de flux qui ($\psi$) décrit un flux magnétique du rotor ;

- une valeur de vitesse de rotation ($\omega_{el}$) qui décrit la vitesse de rotation du rotor dans l'état en rotation ; et
- une valeur d'étalonnage ($\Delta_{ud}$) qui décrit une erreur de tension dépendant de la vitesse de rotation pour la composante d ($u_d$) de la tension de stator.

**13.** Onduleur (2) pour une machine électrique (5), comprenant une unité de puissance (9) qui est conçue pour convertir une tension continue en entrée en courant alternatif polyphasé pour la machine électrique (5) et une unité de commande selon la revendication 12.

**14.** Véhicule (1), comprenant une machine électrique (5) conçue pour entraîner le véhicule (1) et un onduleur (2) selon la revendication 13 conçu pour fournir le courant alternatif à la machine électrique (5).

**15.** Programme informatique avec un code de programmation servant à mettre en œuvre un procédé selon les revendications 1 à 11 lorsque le programme informatique est exécuté sur l'unité de commande selon la revendication 12.

Fig. 1

Fig. 2

EP 3 857 704 B1

Fig. 3

# Fig. 4

Fig. 5

EP 3 857 704 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004061461 A1
- WO 2018133581 A
- EP 3208935 A1


**In der Beschreibung aufgeführte Nicht-Patentliteratur**

- **M. SEILMEIER ; B. PIEPENBREIER.** Impact of iron losses and parameter errors on back-EMF based sensorless control of PMSM. *IECON 2014 - 40th Annual Conference of the IEEE Industrial Electronics Society, Dallas, TX,* 2014, 634-640

- **M. SEILMEIER ; S. EBERSBERGER ; B. PIEPEN-BREIER.** PMSM model for sensorless control considering saturation induced secondary saliencies. *2013 IEEE International Symposium on Sensorless Control for Electrical Drives and Predictive Control of Electrical Drives and Power Electronics (SLED/PRE-CEDE), Munich,* 2013, 1-8